# EUROPÄISCHE PATENTSCHRIFT

(11) **EP 0 500 534 B1**
(45) Veröffentlichungstag und Bekanntmachung des Hinweises auf die Patenterteilung: **30.11.1994**
(21) Anmeldenummer: 90912090.9
(22) Anmeldetag: 24.08.1990
(51) Int. Cl.: F16F 9/46, B60G 17/015

(54) **REGELBARER SCHWINGUNGSDÄMPFER**
ADJUSTABLE SHOCK-ABSORBER
AMORTISSEUR DE VIBRATIONS REGLABLE

(30) Priorität: 10.11.1989 DE 3937454
(43) Veröffentlichungstag der Anmeldung: 02.09.1992
(73) Patentinhaber: ITT Automotive Europe GmbH, 60488 Frankfurt (DE)
(72) Erfinder: KLEIN, Hans-Christof, D-6234 Hattersheim (DE)
(86) Internationale Anmeldenummer: EP9001413
(87) Internationale Veröffentlichungsnummer: WO9107606

(56) Entgegenhaltungen:
- WO-A-85/04698
- WO-A-88/06983
- DE-C- 3 348 176
- FR-A- 2 596 124

## Beschreibung

Die Erfindung betrifft einen regelbaren Schwingungsdämpfer nach dem Oberbegriff des Anspruchs 1.

Ein derartiger Schwingungsdämpfer ist aus FR-A 2 596 124 bekannt. Das Verhalten der im Dämpfungskolben angeordneten, durch Membranen gebildeten Dämpfungsventile ist durch ein einziges, außerhalb des Arbeitszylinders angeordnetes Vorsteuerventil steuerbar, während an beiden Enden des Dämpfungskolbens als federnd vorgespannte Ringscheiben ausgebildete Rückschlagventile vorgesehen sind, die in je einer Verbindung zwischen einer Steuerkammer und der ersten bzw. zweiten Arbeitskammer geschaltet sind.

Weniger vorteilhaft anzusehen ist bei dem vorbekannten Schwingungsdämpfer der ziemlich komplizierte Aufbau des Dämpfungskolbens, der mit erheblichen Herstellungs- und Montagekosten verbunden ist.

Aufgabe der Erfindung ist es daher, einen gattungsgemäßen Schwingungsdämpfer zu schaffen, der sich durch einen einfachen Aufbau auszeichnet und mit geringem Aufwand herstellbar ist, bei dem die regelbaren Dämpfungsventile während der Druck- oder Zugstufe positioniert werden können, wenn das Vorsteuerventil für einen bestimmten Zeitraum geöffnet wird, um ein Dämpfungsflüssigkeitsvolumen abzulassen.

Diese Aufgabe wird erfindungsgemäß durch die kennzeichnenden Merkmale des Anspruchs 1 gelöst.

Eine bevorzugte Ausführungsform des erfindungsgemäßen regelbaren Schwingungsdämpfers sieht vor, daß das Vorsteuerventil als stromlos geschlossenes 2/2-Wegeventil mit elektromagnetischem Antrieb ausgeführt ist.

Eine besonders günstige kompakte Ausführung des Erfindungsgegenstandes sieht vor, daß das Vorsteuerventil zweckmäßigerweise auf der der Kolbenstange gegenüberliegenden Seite des Kolbens angeordnet ist. Dadurch entfallen sowohl die Montage- als auch die Platzprobleme des kolbenstangenseitig zu montierenden Vorsteuerventils.

Eine besonders einfache Anordnung der Kanäle für das aus der Steuerkammer abzuführende Fluid ergibt sich, wenn der Strömungsweg des Fluids aus der Steuerkammer in einen Abströmraum führt, von dem zwei Verbindungskanäle abzweigen, die über je ein Rückschlagventil jeweils in Richtung einer der beiden Arbeitskammern durchströmbar sind.

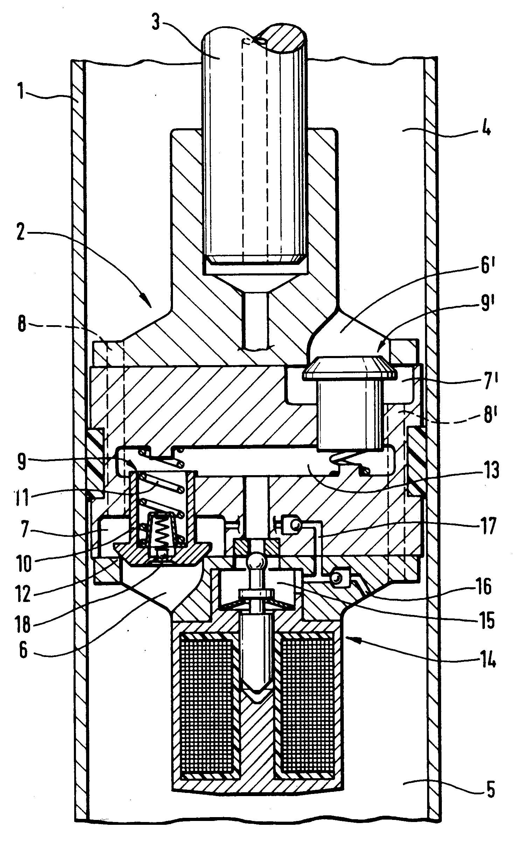

Weitere vorteilhafte Merkmale sowie die Funktion der Erfindung ergeben sich aus der nachstehenden Beschreibung einer Ausführungsform anhand der Zeichnung.

Der in der einzigen Figur dargestellte Schwingungsdämpfer weist einen mit Dämpfungsflüssigkeit gefüllten Zylinder 1 auf, in welchem ein Dämpfungskolben 2, der mit einer Kolbenstange 3 verbunden ist, gedichtet und axial verschiebbar gelagert ist. Die Kolbenstange 3 ist auf einer Stirnseite des Zylinders 1 abgedichtet aus dem Zylinder herausgeführt. Der Dämpfungskolben 2 dieses EinrohrSchwingungsdämpfers unterteilt den vom Zylinder eingeschlossenen Raum in eine erste, der Kolbenstange 3 zugeordnete Arbeitskammer 4 und eine zweite Arbeitskammer 5.

Im Dämpfungskolben 2 sind zwei nicht dargestellte Durchgangsbohrungen vorgesehen, wobei in der einen ein an sich bekanntes fest eingestelltes Dämpfungsventil für die Druckphase (d.h. die Kolbenstange 3 wird in den Zylinder 1 hineinbewegt) und in der anderen ein ebenfalls fest eingestelltes Dämpfungsventil für die Zugphase (Kolbenstange bewegt sich aus dem Zylinder heraus) vorgesehen ist. Des weiteren ist ein Durchlaßkanal für die Druckstufe vorgesehen, welcher sich aus dem Einlaß 6, dem Ventilraum 7 und der Bohrung 8 zusammensetzt, und welcher durch das regelbare Dämpfungsventil 9 steuerbar ist. Für die Zugstufe ist ein weiterer Durchlaßkanal bestehend aus Einlaß 6′, Ventilraum 7′ und Bohrung 8′ vorgesehen, in welchem ein baugleiches Dämpfungsventil 9′ angeordnet ist.

Die baugleichen Dämpfungsventile 9, 9′ bestehen jeweils aus dem Ventilschließglied 10 mit einem hülsenförmigen Schaftabschnitt und einem konischen Dichtungsabschnitt, wobei das Ventilschließglied 10 durch die Ventilfeder 11 mit seinem Dichtabschnitt gegen den Ventilsitz 12 gedrückt wird. Hierdurch ist die Verbindung zwischen dem Einlaß 6,6′ und dem Ventilraum 7, 7′ unterbrochen. Der Schaftabschnitt des Ventilschließgliedes 10 des Dämpfungsventils 9 und 9′ ist gedichtet in den Steuerraum 13 geführt. Vom Steuerraum 13 führt ein durch das Vorsteuerventil 14 schaltbarer Verbindungskanal zum Abströmraum 15. Das Vorsteuerventil 14 ist als stromlos geschlossenes Magnetventil ausgebildet, dessen kugelförmiger Schließkörper in stromlosem Zustand des Antriebsmagneten durch eine Ventilfeder gegen seinen Dichtsitz gepreßt ist.

Vom Abströmraum 15 führt ein Verbindungskanal 16 zur zweiten Arbeitskammer 5 und ein weiterer Verbindungskanal 17 zum Ventilraum 7 und damit über die Bohrung 8 zur ersten Arbeitskammer 4. In den beiden Verbindungskanälen 16, 17 befindet sich jeweils ein Rückschlagventil, welches die Strömungsrichtung von den Arbeitskammern in den Abströmraum 15 sperrt.

In der Stirnseite des konischen Dichtungsabschnittes des Ventilschließgliedes 10 ist eine durchgehende Bohrung 18 geringen Durchmessers vorgesehen, die mit einem federbelasteten Rückschlagventil versehen ist, das die Strömungsrichtung aus dem Steuerraum 13 in den Einlaß 6,6′ sperrt.

Durch die nicht dargestellten, fest eingestellten Dämpfungsventile ist die maximale Dämpfungskraft vorgegeben. Diese bleibt eingestellt, solange sich das Vorsteuerventil 14 in seiner geschlossenen Position befindet. In diesem Falle kann keine Dämpfungsflüssigkeit aus dem Steuerraum 13 abfließen und beide Dämpfungsventile 9,9′ bleiben geschlossen.

Zur Veränderung der Dämpfungskraft, d.h. zum Betätigen des Dämpfungsventils 9 während der Druckstufe, wird das Vorsteuerventil 14 für einen bestimmten Zeitraum geöffnet, so daß Dämpfungsflüssigkeit aus dem Steuerraum 13 über den Verbindungskanal 17, den Ventilraum 7 und die Bohrung 8 in die erste Arbeitskammer 4 abströmen kann. Dadurch kann sich das Ventilschließglied 10 bedingt durch die Druckdifferenz zwischen den beiden Arbeitskammern 5 und 4 von seinem Sitz 12 entfernen. Der Strömungsspalt zwischen dem Ventilsitz 18 und dem Ventilschließglied 10 kann über das aus der Steuerkammer 13 abgelassene Dämpfungsflüssigkeitsvolumen eingestellt werden. Die Ansteuerung des Vorsteuerventils 14 erfolgt in Abhängigkeit von fahrdynamischen Zustandsgrößen wie Fahrgeschwindigkeit, Verzögerung oder Beschleunigung in Längs- oder Querrichtung, Beladungszustand, Aufbau- und/oder Radbeschleunigung, oder dgl.. Die Betätigung des Dämpfungsventils 9′ während der Zugstufe erfolgt sinngemäß entsprechend, wobei das aus dem Steuerraum 13 abströmende Dämpfungsflüssigkeitsvolumen über den Verbindungskanal 16 der zweiten Arbeitskammer 5 zugeführt wird.

Durch die Auslegung des Vorsteuerventils als stromlos geschlossenes 2/2-Wegeventil ist sichergestellt, daß bei Ausfall der elektronischen Ansteuereinrichtung für den magnetischen Antrieb der Stoßdämpfer auf seine härteste, d.h. die sichere Dämpfungscharakteristik eingestellt wird.

### Bezugszeichenliste

- 1: Zylinder
- 2: Dämpfungskolben
- 3: Kolbenstange
- 4: erste Arbeitskammer
- 5: zweite Arbeitskammer
- 6,6′: Einlaß
- 7,7′: Ventilraum
- 8,8′: Bohrung
- 9,9′: Dämpfungsventil
- 10: Ventilschließglied
- 11: Ventilfeder
- 12: Ventilsitz
- 13: Steuerraum
- 14: Vorsteuerventil
- 15: Abströmraum
- 16: Verbindungskanal
- 17: Verbindungskanal
- 18: Bohrung

## Patentansprüche

1. Regelbarer Schwingungsdämpfer mit einem fluidgefüllten Zylinder (1), einem mit einer Kolbenstange (3) verbundenen Dämpfungskolben (2), der den Zylinder (1) in zwei Arbeitskammern (4, 5) unterteilt und der für jede der beiden Durchströmungsrichtungen mindestens ein separates in einem Durchlaßkanal (6, 7, 8, 6′, 7′, 8′) angeordnetes regelbares Dämpfungsventil (9, 9′) aufweist, wobei die regelbaren Dämpfungsventile (9, 9′) durch ein einziges Vorsteuerventil (14) steuerbar sind, das in Abhängigkeit von der Bewegungsrichtung des Dämpfungskolbens (2) die Verbindung zwischen einer für die in entgegengesetzter Richtung durchströmbaren Dämpfungsventile (9, 9′) vorgesehenen gemeinsamen, stets mit der sich verkleinernden Arbeitskammer (4 oder 5) verbundenen Steuerkammer (13) und der sich vergrößernden Arbeitskammer (4 oder 5) schaltet, **dadurch gekennzeichnet**, daß die Verbindung der Steuerkammer (13) mit der sich verkleinernden Arbeitskammer (4 oder 5) über je ein Rückschlagventil erfolgt und daß die Rückschlagventile in den Dämpfungsventilen (9, 9′) integriert sind.

2. Regelbarer Schwingungsdämpfer nach Anspruch 1, **dadurch gekennzeichnet**, daß das Vorsteuerventil (14) als stromlos geschlossenes 2/2-Wegeventil mit elektromagnetischem Antrieb ausgeführt ist.

3. Regelbarer Schwingungsdämpfer nach Anspruch 1 der 2, **dadurch gekennzeichnet**, daß das Vorsteuerventil (14) auf der der Kolbenstange (3) gegenüberliegenden Seite des Dämpfungskolbens (2) angeordnet ist.

4. Regelbarer Schwingungsdämpfer nach einem der Ansprüche 1 bis 3, dadurch **gekennzeichnet**, daß der Strömungsweg des Fluids aus der Steuerkammer (13) in einen Abströmraum (15) führt, von dem zwei Verbindungskanäle (16,17) abzweigen, die über je ein Rückschlagventil in Richtung jeweils einer der beiden Arbeitskammern (4,5) durchströmbar sind.

5. Regelbarer Schwingungsdämpfer nach einem der vorhergehenden Ansprüche, dadurch **gekennzeichnet**, daß im Dämpfungskolben (2) und/oder der Kolbenstange (3) weitere Durchlaßkanäle mit fest eingestellten Dämpfungsventilen vorgesehen sind.

## Claims

1. A controllable vibration absorber with a cylinder (1) filled with fluid, a damping piston (2) which is coupled to a piston rod (3), which subdivides the cylinder (1) into two power chambers (4, 5), and which for each one of the two directions of throughflow is furnished with at least one separate controllable damping valve (9, 9′) being positioned in a through duct (6, 7, 8, 6′, 7′, 8′), the said controllable damping valves (9, 9′) being controllable by one single pilot valve (14) which, in dependence on the direction of movement of the damping piston (2), governs the connection between a common control chamber (13), provided for the damping valves (9, 9′) through which fluid is allowed to flow in opposite direction and being connected always to the power chamber (4 or 5) diminishing in size, and the power chamber (4 or 5) increasing in size,
**characterized** in that the connection between the control chamber (13) and the power chamber (4 or 5) diminishing in size is constituted through one non-return valve each, and in that the non-return valves are integrated in the damping valves (9, 9′).

2. A controllable vibration absorber as claimed in claim 1,
**characterized** in that the pilot valve (14) is designed in the shape of a two-way/two-position directional control valve being closed when de-energized and being furnished with an electromagnetic drive.

3. A controllable vibration absorber as claimed in claim 1 or claim 2,
**characterized** in that the pilot valve (14) is arranged on the side of the damping piston (2) which is opposite to the piston rod (3).

4. A controllable vibration absorber as claimed in any one of the claims 1 to 3,
**characterized** in that the flow path of the fluid leads from the control chamber (13) to a flow-off chamber (15), from which two connecting ducts (16, 17) branch off, through which fluid is allowed to flow via one each non-return valve in the direction of one of the two power chambers (4, 5).

5. A controllable vibration absorber as claimed in any one of the preceding claims,
**characterized** in that further through ducts with invariably adjusted damping valves are provided in the damping piston (2) and/or the piston rod (3).

## Revendications

1. Amortisseur de vibrations de type réglable, comprenant un cylindre (1), rempli d'un fluide, et un piston d'amortissement (2) qui est solidaire d'une tige de piston( 3) et divise le cylindre (1) en deux chambres de travail (4, 5) et qui comprend, pour chacune des deux directions de passage d'écoulement, au moins une soupape d'amortissement (9, 9′) de type réglable disposée dans un conduit de passage (6, 7, 8, 6′, 7′, 8′), les soupapes d'amortissement (9, 9′) de type réglable étant agencées de façon à pouvoir être commandées au moyen d'une soupape-pilote (14) unique qui, en fonction de la direction de déplacement du piston d'amortissement (2), assure une commutation d'état de la jonction existant entre, d'une part, une chambre de commande (13) commune qui est prévue pour les soupapes d'amortissement (9, 9′) pouvant être traversées par un écoulement dans des sens opposés et qui communique constamment avec la chambre de travail (4 ou 5) dont le volume diminue et, d'autre part, la chambre de travail (4 ou 5) dont le volume augmente, caractérisé en ce que la jonction de la chambre de commande (13) avec la chambre de travail (4 ou 5) dont le volume diminue s'effectue dans chaque cas par l'intermédiaire d'un clapet antiretour associé et en ce que les clapets antiretour sont montés de façon à faire partie intégrante des soupapes d'amortissement (9, 9′).

2. Amortisseur de vibrations de type réglable suivant la revendication 1, caractérisé en ce que la soupape-pilote (14) est réalisée sous la forme d'une électrovanne à 2 voies/2 positions fermée en l'absence de courant.

3. Amortisseur de vibrations de type réglable suivant l'une des revendications 1 et 2, caractérisé en ce que la soupape-pilote (14) est disposée sur le côté du piston d'amortissement (2) qui est situé à l'opposé de la tige de piston (3).

4. Amortisseur de vibrations de type réglable suivant l'une des revendications 1 à 3, caractérisé en ce que le trajet d'écoulement du fluide mène de la chambre de commande (13) à une chambre d'évacuation (15) à partir de laquelle divergent deux conduits de jonction (16, 17) qui sont agencés de façon à pouvoir être traversés, chacun par l'intermédiaire d'un clapet antiretour, en direction de l'une, respective, des deux chambres de travail (4, 5).

5. Amortisseur de vibrations de type réglable suivant l'une des revendications précédentes, caractérisé en ce que, dans le piston d'amortissement (2) et/ou la tige de piston (3), il est prévu d'autres conduits de passage comportant des soupapes d'amortissement à réglage fixe.
